# EUROPÄISCHE PATENTSCHRIFT

(11) **EP 3 586 307 B1**
(45) Veröffentlichungstag und Bekanntmachung des Hinweises auf die Patenterteilung: **04.12.2024**
(21) Anmeldenummer: 17793608.5
(22) Anmeldetag: 18.10.2017
(51) Int. Cl.: G06T 7/13

(54) **VERFAHREN UND VORRICHTUNG ZUR ERKENNUNG VON ECKEN**
METHOD AND DEVICE FOR DETECTING CORNERS
PROCÉDÉ ET DISPOSITIF DE RECONNAISSANCE DE COINS

(30) Priorität: 24.02.2017 DE 102017103953
(43) Veröffentlichungstag der Anmeldung: 01.01.2020
(73) Patentinhaber: Volume Graphics GmbH, 69115 Heidelberg (DE)
(72) Erfinder: GÜNTHER, Thomas, 69115 Heidelberg (DE); POLIWODA, Christoph, 69115 Heidelberg (DE); REINHART, Christof, 69115 Heidelberg (DE)
(74) Vertreter: Patentanwälte Olbricht Buchhold Keulertz
(86) Internationale Anmeldenummer: PCT/EP2017/076597
(87) Internationale Veröffentlichungsnummer: WO 2018/153511

(56) Entgegenhaltungen:
- EP-A1- 0 930 499
- US-A1- 2006 262 989
- ZIOU D ET AL: "EDGE DETECTION TECHNIQUES-AN OVERVIEW", PATTERN RECOGNITION. IMAGE ANALYSIS, ALLEN PRESS, LAWRENCE, KS, US, vol. 8, no. 4, 1 January 1998 (1998-01-01), pages 537 - 559, XP008029269, ISSN: 1054-6618
- "Machine Perception", 1 January 1982, PRENTICE-HALL, ISBN: 978-0-13-541904-5, article RAMAKANT NEVATIA: "Chapter 7: Edge and Curve Detection", pages: 100 - 127, XP055435541

## Beschreibung

Die Erfindung betrifft ein computer-implementiertes Verfahren zur Bestimmung von Materialgrenzflächen eines Objekts gemäß dem Oberbegriff von Anspruch 1, sowie eine entsprechende Vorrichtung nach Anspruch 8 und ein Computerprogrammprodukt nach Anspruch 9.

Die Bestimmung der Lage von Materialgrenzflächen in einem Objekt durch bildgebende Verfahren ist ein im Stand der Technik allgegenwärtiges Problem. Eine Materialgrenzfläche beschreibt dabei in einem Objekt, wie beispielsweise einem Werkstück, genau jene Grenzfläche, entlang derer in dem Objekt unterschiedliche Materialien aneinander angrenzen. Neben Grenzflächen innerhalb eines Objekts, entlang derer beispielsweise ein Übergang von einem Kunststoff zu einem Metall vorliegt, kann unter einer Materialgrenzfläche auch jene Fläche verstanden werden, welche ein Objekt gegenüber seiner Umgebung bzw. der Umgebungsluft abgrenzt. Somit kann die Bestimmung von Grenzflächen insbesondere auch zur Bestimmung der Abmessungen von untersuchten Objekten dienen. Ein technischer Bereich, in dem die exakte Bestimmung von Grenzflächen zunehmend an Bedeutung gewinnt ist beispielsweise die computertomographische Untersuchung von Werkstücken, die unter anderem in der Fertigung zur Qualitätssicherung verwendet wird.

Unabhängig von dem verwendeten bildgebenden Verfahren besteht im Stand der Technik das Problem, dass bekannte Algorithmen zur Bestimmung von Materialgrenzflächen nicht in der Lage sind, die exakte Lage von Materialgrenzflächen in Bereichen zu ermitteln, in denen zwei oder mehr Grenzflächen in einem Winkel aufeinanderstoßen. Insbesondere die Bestimmung der exakten Position des Aufeinandertreffens der unterschiedlich ausgerichteten Materialgrenzflächen ist aufgrund von Verschmierungseffekten bei der Erzeugung der Abbildungen der untersuchten Geometrie mit aus dem Stand der Technik bekannten Verfahren nicht möglich. Solche Geometrien sind an Werkstücken häufig zu finden, beispielsweise im Bereich von Schnittkanten oder Bohrlöchern. Die exakte Bestimmung der Lage solcher Winkel ist dabei zur exakten Bestimmung der Bemaßungen der Geometrien notwendig und beispielsweise im Bereich der Qualitätssicherung essentiell. Folglich besteht ein großer Bedarf für eine Technologie, welche die exakte Bestimmung von "Ecken" ermöglicht, also den Bereichen, an denen zwei oder mehr Materialgrenzflächen unter einem Winkel aufeinandertreffen. Die Patentschriften US 2006/262989 A1 und EP0930499 A1 offenbaren Methoden zur Bildverbesserung respektive genaueren Lagebestimmung von Bildkanten.

Hauptmerkmale der Erfindung sind im Anspruch 1, sowie in den Ansprüchen 8 und 9 angegeben. Ausgestaltungen sind Gegenstand der Ansprüche 2 bis 8. In einem ersten Aspekt betrifft die Erfindung ein computer-implementiertes Verfahren zur Bestimmung von Materialgrenzflächen eines Objekts mittels wenigstens einer Messung an dem Objekt, wobei durch die Messung eine gerasterte Darstellung des Objekts erzeugt wird. Die gerasterte Darstellung weist dabei eine Vielzahl von Messpunkten auf, wobei ein Messpunkt wenigstens eine Bildinformation aufweist. Die Bildinformation zeigt dabei einen Wert einer Messgröße für das Objekt an der Position des Messpunktes an. Das erfindungsgemäße Verfahren weist nun zunächst das Ermitteln einer Parametrisierung der gerasterten Darstellung des Objekts auf, wobei die Parametrisierung den Messpunkten einer Teilmenge der Messpunkte der Darstellung jeweils wenigstens einen Parameter zuordnet. Anschließend wird wenigstens ein parameterabhängiger Kantenfindungsoperator auf die Messpunkte der gerasterten Darstellung angewendet. Ein Kantenfindungsoperator ist dabei dazu ausgebildet, die Lage von wenigstens einer Materialgrenzfläche in der gerasterten Darstellung zu ermitteln.

Bei dem Ermitteln der Lage einer Materialgrenzfläche aus der Bildinformation eines Messpunkts berücksichtigt der Kantenfindungsoperator dabei wenigstens die Bildinformationen einer Teilmenge der zu dem Messpunkt in der gerasterten Darstellung benachbarten Messpunkte. Dabei definiert wenigstens einer der Parameter eines Messpunktes eine Analyserichtung innerhalb der gerasterten Darstellung. Die Kantenfindungsoperatoren sind bei Anwendung auf einen Messpunkt dazu ausgebildet, entlang der durch den Parameter des Messpunkts definierten Analyserichtung die Lage wenigstens einer Materialgrenzfläche zu ermitteln. Für eine Teilmenge der Messpunkte wird dabei durch wenigstens zwei der Parameter eines Messpunktes jeweils eine Analyserichtung definiert, wobei je Analyserichtung wenigstens ein Kantenfindungsoperator auf den Messpunkt angewendet wird, der entlang der jeweiligen Analyserichtung die Lage wenigstens einer Materialgrenzfläche ermittelt.

Zur Durchführung der Messung kann dabei ein beliebiges bildgebendes Verfahren Anwendung finden. Insbesondere sind hier die Computertomographie, die Magnetresonanztomographie, die Positronen-Emissions-Tomographie und die 3D-Sonographie zu nennen.

Die durch einen Parameter definierte Analyserichtung kann dabei beispielsweise aus der Kenntnis der grundsätzlichen geometrischen Form des untersuchten Objekts abgeleitet werden. Experimente haben gezeigt, dass durch eine feste Definition der Analyserichtung die Präzision der Kantenfindung gegenüber im Stand der Technik bekannten Verfahren, welche beispielweise die Analyserichtung aus einem Gradienten der Grauwerte bestimmen, verbessert werden kann. Ferner können bei der Definition der Analyserichtung besondere Geometrien oder Begebenheiten des untersuchten Objekts Berücksichtigung finden, welche bei der anderweitigen Bestimmung der Analyserichtung, beispielsweise durch Bestimmung eines Gradienten der Grauwerte, nicht berücksichtigt werden könnten. Dabei ist die bei der Bestimmung einer Materialgrenzfläche verwendete Analyserichtung vorzugsweise senkrecht zu der zu bestimmenden Materialgrenzfläche ausgerichtet.

Durch die Vorgabe mehrerer Analyserichtungen in denen ausgehend von einem Messpunkt nach Materialgrenzflächen gesucht werden, hat den Vorteil, dass auch komplexe und mit den im Stand der Technik bekannten Verfahren nur ungenau detektierbare Geometrien wie beispielsweise rechtwinklige Ecken sicher und exakt detektiert werden können. So ist beispielsweise bei der Ermittlung der Analyserichtung aus einem Gradienten der Grauwerte, wie sie aus dem Stand der Technik bekannt ist, eine sichere und genaue Detektion von Ecken und Winkeln nicht möglich. Vielmehr ist bei der Verwendung einer aus einem Gradienten bestimmten Analyserichtung im Bereich der Ecken ein "Verschwimmen" bzw. "Verrunden" der Grenzflächen zu erkennen, infolge dessen Materialgrenzflächen im Bereich von Ecken nicht spitz, sondern vielmehr abgerundet erscheinen. Trennt man jedoch die Analyse einer solchen Ecke in jeweils eine Analyse pro Kantenrichtung auf, können die zuvor genannten Effekte der unsauberen Kantenfindung im Bereich von Winkeln und Ecken vermieden werden.

Die gerasterte Darstellung des untersuchten Objekts, welche in Folge der Messung erzeugt wird, kann dabei sowohl zweidimensional als auch dreidimensional sein. Im Falle einer dreidimensionalen Darstellung handelt es sich bei den Messpunkten um Volumenpixel bzw. Voxel, während es sich bei der zweidimensionalen Darstellung bei den Bildpunkten um einfache Pixel handelt. Die Bildinformation eine Voxels gibt dabei den mittleren Wert einer Messgröße für das Objekt wieder, der sich durch eine Faltung einer Umgebung um den betrachteten Voxel mit der Punktspreizfunktion (Point Spread Function, PSF) des verwendeten Systems ergibt. Es ist dabei auch möglich eine dreidimensionale Darstellung eines Objekts in eine Serie von zweidimensionalen Schnittbildern der dreidimensionalen Darstellung zu zerlegen.

Bei einem "Wert einer Messgröße" handelt es sich im Allgemeinen um einen Zahlenwert, der eine bestimmte Eigenschaft eines Materials des untersuchten Objekts derart quantifiziert, dass das entsprechende Material in der gerasterten Darstellung von anderen Materialien unterschieden werden kann. Der Wert der Messgröße ist dabei nicht mit dem bzw. den Parametern eines Messpunktes zu verwechseln, welche den Messpunkten in Folge der Parametrisierung der gerasterten Darstellung zugeordnet werden. Während der Wert der Messgröße das Material bzw. eine Materialeigenschaft des untersuchten Objekts beschreiben, dienen die Parameter der Parametrisierung als Zusatzinformation, welche bei der Bestimmung von Materialgrenzflächen verwendet werden kann. Handelt es sich beispielsweise bei dem zur Messung verwendeten bildgebenden Verfahren um eine Computertomographie kann der Wert der Messgröße beispielsweise den Grad der Abschwächung beschreiben, den Röntgenstrahlung erfährt, wenn sich das entsprechende Material durchquert. Die betrachtete Messgröße wäre folglich die Röntgendichte des durchstrahlten Mediums. Handelt es sich hingegen bei dem bildgebenden Verfahren um eine Magnetresonanztomographie, kann der Wert der Messgröße die Resonanzfrequenz oder die Relaxationszeit des Materials sein.

Das zur gerasterten Darstellung verwendete Raster kann dabei grundsätzlich jede beliebige Form aufweisen. Im einfachsten Fall weist das Raster orthogonale Achsen auf, welche in alle drei Raumrichtungen in regelmäßigen Abständen in Segmente unterteilt sind. Das von je einem Segment in alle Raumrichtungen umschriebene Volumen definiert dann genau ein Voxel. Das verwendete Raster ist jedoch nicht auf ein solches gleichmäßiges und orthogonales Raster festgelegt. Vielmehr können die Achsen des Rasters auch anderen Anordnungen folgen, sodass sich für die Voxel eine andere, beispielsweise nicht-kubische Form ergibt. So kann ein Raster auch hexagonal ausgeführt sein. Dabei müssen auch nicht alle Voxel oder Pixel in der gerasterten Darstellung gleich groß sein. Vielmehr ist es beispielsweise auch möglich eine Vielzahl von Messpunkten mit identischen Bildinformationen in einem einzigen gemeinsamen Voxel oder Pixel zusammenzufassen.

Unter einem "Parameter", wie er zuvor beschrieben wurde, kann dabei erfindungsgemäß eine beliebig komplexe Größe verstanden werden. Zur Definition einer Analyserichtung kann dabei der Parameter beispielsweise eine Richtung in dem Raster der gerasterten Darstellung in Form eines Vektors vorgeben. Ferner könnte ein Parameter auch eine Information bezüglich der Materialen enthalten, welche bei einer Materialgrenzfläche aneinanderstoßen. Beispielsweise könnte so durch den Parameter bereits eine zu erwartende Bildinformation eines Messpunktes codiert sein. Auch weitere, beliebig komplexe Informationen, welche für die Ermittlung einer Materialgrenzfläche relevant sind, können im Weiteren unter dem Begriff "Parameter" subsummiert werden.

Im Bereich der digitalen Bildverarbeitung sind Operatoren zur Analyse und Bearbeitung von Bilddaten in vielfältigen Varianten bekannt. Ein prominentes Beispiel für einen Operator, welcher in der digitalen Bildverarbeitung häufig zur Erkennung von Kanten eingesetzt wird, ist der Sobel-Operator. Bei dem Sobel- Operator handelt es sich im Wesentlichen um einen Tensor mit Rang n mit definierten Einträgen. Der Rang des Tensors richtet sich dabei nach der Zahl der Dimensionen des untersuchten Bildes. Die Anwendung eines solchen Operators auf ein Bild bzw. einen Bildpunkt erfolgt durch eine diskrete Faltung der Bilddaten einer Abbildung mit dem Tensor des Operators.

Im Rahmen der vorliegenden Anmeldung ist unter der Bezeichnung "Operator" jedoch nicht zwingend nur ein bloßer Tensor zu verstehen. Vielmehr kann es sich bei einem einzelnen Operator im Rahmen der vorliegenden Erfindung um eine beliebig komplexe Kombination von Faltungstensoren, Rechenoperationen, Kurvenfits oder ähnlichem handeln, die in einer bestimmten Abfolge nacheinander ausgeführt werden und jeweils die Ergebnisse von vorangegangenen Operationen des Operators weiterverarbeiten. Dabei muss ein Operator im Kontext der vorliegenden Anmeldung nicht zwingend auch einen Faltungstensor im Sinne des oben beschriebenen Sobel-Operators beinhalten. Es ist vielmehr auch möglich, dass ein Operator vollständig ohne die Durchführung einer Faltung der Abbildungsdaten mit einem Faltungstensor auskommt. Relevant ist bei der Definition eines Operators nur, dass die Anwendung des Operators auf die Abbildungsdaten das gewünschte Ergebnis, nämlich die Erkennung von Materialgrenzflächen erzielt.

Die Bedeutung des Ausdrucks "Anwenden eines parameterabhängigen Operators" kann dabei je nach Anwendungsfall und Art des Operators unterschiedlich sein. So kann, wie zuvor bereits ausgeführt wurde, ein Parameter beispielsweise anzeigen, in welcher Richtung nach einer Materialgrenzfläche gesucht werden soll. In diesem Fall besteht die Parameterabhängigkeit darin, dass je nach Wert des Parameters eine oder mehrere der bei Anwendung eines Operators durchgeführten Operationen an die durch den Parametervorgegebene Analyserichtung angepasst sind, bzw. diesen berücksichtigen. Die Parameterabhängigkeit kann sich hingegen auch darin äußern, dass in Abhängigkeit von dem Wert des Parameters unterschiedliche Operatoren angewendet werden. Ein Parameter kann dabei in mannigfaltigen Varianten Einfluss auf die Ausführung eines Operators haben. Beispielweise kann durch einen Parameter ein Offset codiert sein, welches bei der Durchführung einer Rechenoperation berücksichtigt werden soll. Ferner kann durch einen Parameter auch eine bestimmte Menge von Messpunkten vorgegeben werden, welche bei der Anwendung des Operators berücksichtigt werden sollen. Auch ist es möglich, dass der Parameter eine Zusatzinformation codiert, welche Einfluss auf die Anwendung des Operators hat. So kann der Parameter beispielsweise die Impulsantwort des abbildenden Systems, auch als Point Spread Function (PSF) bekannt, beinhalten, sodass diese bei der Anwendung des Operators berücksichtigt werden kann.

Die Lage einer Materialgrenzfläche ist dabei erfindungsgemäß nicht durch das Raster bzw. die Anordnung der Rasterpunkte festgelegt. Vielmehr kann sich die Lage einer im Zuge des Verfahrens ermittelten Materialgrenzfläche auch zwischen den Rasterpunkten befinden. Somit ist durch das erfindungsgemäße Verfahren ferner eine Sub-Pixel- bzw. Sub-Voxel-genaue Bestimmung von Materialgrenzflächen möglich, wobei Grenzflächen je nach Qualität der verwendeten Messdaten mit einer Genauigkeit von 1/100 Voxel und weniger ermittelt werden können.

Unter einer "Analyserichtung" kann dabei eine Richtung innerhalb des Rasters der gewählten Darstellung des Objekts verstanden werden. Die Analyserichtung kann beispielsweise durch einen Vektor angegeben werden, welcher in dem durch das Raster aufgespannten Koordinatensystem definiert ist.

Nach einer Ausführungsform ist dabei vorgesehen, dass die Bildinformation eines Messpunkts wenigstens einen Grauwert umfasst, der den Wert der Messgröße für das Objekt am Ort des Messpunkts anzeigt. Der wenigstens eine Kantenfindungsoperator ist dabei dazu ausgebildet, ausgehend von einem Messpunkt durch einen Fit eines theoretischen Modells der Grauwerte für eine Materialgrenzfläche an die Grauwerte von Messpunkten und/oder aus den Grauwerten abgeleiteten Werten in der Umgebung des Messpunktes die Lage der Materialgrenzfläche zu ermitteln. Die Bezeichnung "am Ort des Messpunktes" beschreibt dabei genau jenen Punkt oder Raumbereich des untersuchten Objekts, welcher in der gerasterten Darstellung dem betrachteten Pixel oder Voxel entspricht. Um eine Materialgrenzfläche zu detektieren, muss dabei der betrachtete Messpunkt in der näheren Umgebung der Materialgrenzfläche angesetzt werden. Unter einer "näheren Umgebung einer Materialgrenzfläche" ist dabei die Menge all jener Bildpunkte zu verstehen, deren Grauwert aufgrund der Impulsantwort des verwendeten Systems durch die Grauwerte von Messpunkten beeinflusst wird, die die zu detektierende Materialgrenzfläche abbilden.

Der theoretische Verlauf der Grauwerte für eine Materialgrenzfläche kann dabei unter Berücksichtigung einer Vielzahl von Einflussgrößen bestimmt werden. Beispielsweise ist es auf diese Weise möglich, den Effekt der PSF des zur Aufnahme der Messpunkte verwendeten Abbildungssystems in der Erstellung des theoretischen Modells zu berücksichtigen. Die PSF eines abbildenden Systems führt dabei im Allgemeinen zu einem "verschmieren" der Messwerte, so dass eigentlich scharfe Kanten eines untersuchten Objekts in der Abbildung, wie sie an Materialgrenzflächen eigentlich vorliegen, als verwaschener, gradueller Übergang erscheinen. Bei der Bestimmung des theoretischen Verlaufs können, sofern bekannt, auch weitere Faktoren berücksichtigt werden, welche bei der Messung an dem Objekt zu einer nicht-idealen Abbildung des Objekts führen. Zur Anpassung des theoretischen Verlaufs an die Messwerte kann ein beliebiges Verfahren der Ausgleichrechnung verwendet werden. Beispielsweise kann hier das Verfahren der kleinsten Fehlerquadrate angewendet werden. Durch die Wahl der durchgeführten Iterationen zur Kurvenanpassung kann dabei die Genauigkeit der Kantenermittlung gegenüber der verursachten Rechenlast abgewogen werden.

Wird durch den Parameter eines Messpunktes eine Analyserichtung angegeben, so wird diese bei der Ermittlung einer Materialgrenzfläche durch einen Fit nach einer Ausführungsform dadurch berücksichtigt, dass wenigstens ein Kantenfindungsoperator dazu ausgebildet ist, die Lage einer Materialgrenzfläche durch den Fit entlang der durch den wenigstens einen Parameter angezeigten Analyserichtung zu ermitteln. Beispielsweise kann hierzu der Verlauf der Grauwerte ausgehend von dem betrachteten Messpunkt entlang eines Vektors in Richtung der Analyserichtung ermittelt werden. Durch einen Fit eines theoretischen Verlaufs der Grauwerte für eine Materialgrenzfläche an den so ermittelten Verlauf der Grauwerte kann dann die Position einer Materialgrenzfläche ermittelt werden.

Die Parametrisierung, welche erfindungsgemäß bei der Ermittlung von Materialgrenzflächen genutzt wird, wird nach einer Ausführungsform aus einem Modell des untersuchten Objekts bestimmt. So kann beispielweise aus einem Modell direkt abgeleitet werden, an welchen Stellen Ecken und Winkel vorhanden sind und wie die an der Ecke aufeinanderstoßenden Grenzflächen ausgerichtet sind. Das so ermittelte Parametermodell kann dann auf die Daten aus einer Messung an dem Objekt übertragen werden, sodass die anschließende Ermittlung der Materialgrenzflächen mittels geeigneter Kantenfindungsoperatoren erfolgen kann, welche wiederum von den Parametern der Parametrisierung abhängen. Ein solches Modell kann durch einen weiteren Messvorgang abgeleitet werden, beispielsweise durch eine optische Messung. Beispielsweise kann die Oberfläche des zu untersuchenden Objekts zunächst mittels eines Lasers abgetastet werden, sodass ein Oberflächenmodell erstellt werden kann.

Alternativ handelt es sich bei dem Modell des untersuchten Objekts nach einer Ausführungsform um ein CAD-Modell. Die Verwendung eines CAD-Modells hat dabei den Vorteil, dass das Modell des untersuchten Objekts bereits vollständig in digitaler Form mit den geplanten Bema-βungen vorliegt, sodass es mit geringem Aufwand auf Messdaten aus einer Messung an dem Objekt übertragbar ist.

Neben der Verwendung eines CAD-Modells kann nach einer weiteren Ausführungsform auch vorgesehen sein, dass die Parametrisierung durch wenigstens eine Benutzereingabe erzeugt wird. Beispielsweise kann vorgesehen sein, dass sich ein Anwender, welcher die Untersuchung des Objekts überwacht, die im Zuge der Messung erzeugte gerasterte Darstellung des untersuchten Objekts inspiziert und nach Augenschein oder aufgrund von Erfahrungswerten mittels eines entsprechenden Eingabegerätes Bereiche markiert, in denen Ecken und Winkel vorliegen. Ferner kann der Anwender auch die Analyserichtungen bei der später erfolgenden Kantenfindung mittels einer entsprechenden Schnittstelle in der angezeigten gerasterten Darstellung definieren.

Neben den zuvor beschriebenen Ausführungsformen zur Bestimmung der Parametrisierung, wird die Parametrisierung erfindungsgemäss aus den Bildinformationen wenigstens einer Teilmenge der Messpunkte ermittelt. Die hierbei verwendete Teilmenge von Bildpunkten ist dabei vorzugsweise so gewählt, dass sie zumindest die in der Objektdarstellung vorhandenen Materialgrenzflächen abbildet. Vorzugsweise bildet die Teilmenge von Bildpunkten ferner auch einen Bereich um die Materialgrenzflächen herum ab, sodass eine ausreichende Menge an Bildinformationen zur Bestimmung der Parametrisierung vorhanden ist. Die direkte Bestimmung der Parametrisierung aus den Bildinformationen selbst hat dabei den Vorteil, dass eine Automatisierung der Kantenfindung leichter zu erreichen ist, da abgesehen von den eigentlichen Messdaten keine zusätzlichen Informationen für die Bestimmung der Parametrisierung und die anschließende Kantenfindung notwendig sind.

Nach einer weiteren Ausführungsform handelt es sich bei wenigstens einem der Kantenfindungsoperatoren um einen Mehrfachkantenfindungsoperator, der dazu ausgebildet ist, bei Anwendung auf einen Messpunkt die Lage von wenigstens zwei direkt benachbarten Materialgrenzflächen in dem Objekt zu ermitteln. Dabei wird der Mehrfachkantenoperator genau dann auf einen Messpunkt angewendet, wenn wenigstens einer der Parameter des Messpunktes anzeigt, dass innerhalb der Umgebung des Messpunktes mehrere Materialgrenzflächen direkt benachbart zueinander angeordnet sind.

Die parameterabhängige Anwendung eines Kantenfindungsoperators, der in der Lage ist, auch direkt benachbarte Materialgrenzflächen aufzulösen, hat dabei den Vorteil, dass auch sehr dünne Strukturen wie beispielsweise Risse und Beschichtungen in einem untersuchten Objekt erkannt werden können. Experimente haben dabei gezeigt, dass Algorithmen zur gezielten Suche nach einer Abfolge direkt benachbarter Materialgrenzflächen einen erhöhten Rechenaufwand gegenüber Algorithmen zur Bestimmung einer einzelnen, isolierten Materialgrenzfläche mit sich bringen. Dieser erhöhte Rechenaufwand wird jedoch erfindungsgemäß auf ein handhabbares Maß reduziert, indem auf Grundlage einer Parametrisierung der Messpunkte ein Mehrfachkantenfindungsoperator nur dann angewendet wird, wenn die Anwendung durch einen entsprechenden Parameter der Messpunkte indiziert ist. Somit ist der Rechenaufwand zur Erkennung von Mehrfachkanten auf ein Minimum reduziert. Wird durch die Parametrisierung eines Messpunktes hingegen nicht angezeigt, dass in ein Mehrfachkantenfindungsoperator angewendet werden soll, ist in dem Verfahren vorgesehen, dass ein Kantenfindungsoperator auf den Messpunkt angewendet wird, welcher lediglich zur Detektion einer einzelnen Materialgrenzfläche ausgebildet ist.

Hierzu kann ein einzelner Parameter eines Messpunkts beispielsweise anzeigen, ob in der Umgebung des Messpunkts eine direkte Abfolge benachbarter Materialgrenzflächen vorliegt, oder nicht. In diesem Fall könnte der Parameter als binäre Größe definiert werden. Der Parameter könnte ferner auch Aufschluss darüber geben, wie viele Materialgrenzflächen in der näheren Umgebung des Messpunkts vorliegen. Schließlich könnte ein Parameter auch eine Information bezüglich der Materialen enthalten, welche bei der oder den Materialgrenzflächen aneinanderstoßen.

Im Stand der Technik bekannte Verfahren zur Detektion von Materialgrenzflächen sind häufig nicht in der Lage eine dichte Abfolge von direkt nebeneinander angeordneten Materialgrenzflächen von einer einzelnen Materialgrenzfläche zu unterscheiden, oder die jeweiligen Lagen der einzelnen Materialgrenzflächen bei einer dichten Abfolge nebeneinander angeordneter Materialgrenzflächen exakt zu bestimmen.

Dies ist zumeist auf Unschärfeeffekte in den erzeugten Abbildungen des untersuchten Objekts zurückzuführen. Unter der Bezeichnung "direkt benachbarte Materialgrenzflächen" sind daher all jene Abfolgen von Materialgrenzflächen zu verstehen, die durch einen Kantenfindungsoperator, der lediglich zu Detektion einer einfachen Materialgrenzfläche ausgebildet ist, nicht mehr als individuelle Materialgrenzflächen auflösbar sind. Dabei kann die Bezeichnung "direkt benachbart" je nach verwendetem bildgebendem Verfahren und je nach Messsituation unterschiedliche Längenmaße bezeichnen. Bei einer stark vergrößerten Aufnahme eines Objekts mit einem sehr kleinen Fokus der Messapparatur kann so der Ausdruck "direkt benachbart" auf eine Distanz zwischen zwei Grenzflächen von wenigen Mikrometern abstellen, während bei einer geringeren Vergrößerung eine Abfolge "direkt benachbarter Materialgrenzflächen" auch bei einem Abstand von einigen Millimetern zwischen den Materialgrenzflächen vorliegen kann.

Dabei kann nach einer Ausführungsform vorgesehen sein, dass ein Parameter eines Messpunktes nicht nur anzeigt, ob in der direkten Umgebung des Messpunkts eine Mehrfachkante vorliegt, sondern auch wie viele einzelne Materialgrenzschichten die Mehrfachkante enthält. Dementsprechend kann bei Anwendung des Mehrfachkantenfindungsoperators genau der erwartete theoretische Verlauf der Grauwerte für die Ermittlung der Lagen der Materialgrenzschichten verwendet werden, welcher unter der Annahme der korrekten Zahl von einzelnen Materialgrenzschichten ermittelt wurde.

Wird die Position der einzelnen Materialgrenzflächen durch eine Anpassung des theoretischen Verlaufs der Grauwerte an die tatsächlich gemessenen Grauwerte ermittelt, kann der theoretische Verlauf der Grauwerte in Abhängigkeit der erwarteten Zahl von Materialgrenzschichten ermittelt werden. Durch die Anpassung des theoretischen Verlaufs der Grauwerte einer Mehrfachkante an die vorliegenden Grauwerte kann auf effiziente Art und Weise die Position der einzelnen Materialgrenzschichten ermittelt werden.

In einem weiteren Aspekt betrifft die Erfindung eine Vorrichtung zur Durchführung von Messungen an einem Objekt und zur Bestimmung von Materialgrenzflächen eines Objekts mittels wenigstens einer Messung an dem Objekt, wobei durch die Messung eine gerasterte Darstellung des Objekts erzeugt wird. Die gerasterte Darstellung weist eine Vielzahl von Messpunkten auf, wobei ein Messpunkt wenigstens eine Bildinformation aufweist, welche einen Wert einer Messgröße für das Objekt an der Position des Messpunktes anzeigt. Die Vorrichtung ist dabei dazu ausgebildet, wenigstens eine Messung an dem Objekt durchzuführen, und eine Parametrisierung der aus der Messung erhaltenen gerasterten Darstellung des Objekts zu ermitteln, wobei die Parametrisierung den Messpunkten einer Teilmenge der Messpunkte der Darstellung jeweils wenigstens einen Parameter zuordnet. Ferner ist die Vorrichtung dazu ausgebildet, wenigstens einen parameterabhängigen Kantenfindungsoperator auf die Messpunkte der gerasterten Darstellung anzuwenden, wobei ein Kantenfindungsoperator dazu ausgebildet ist, die Lage von wenigstens einer Materialgrenzfläche in der gerasterten Darstellung zu ermitteln.

Dabei berücksichtigt der Kantenfindungsoperator bei dem Ermitteln der Lage einer Materialgrenzfläche aus der Bildinformation eines Messpunktes wenigstens die Bildinformation einer Teilmenge der zu dem Messpunkt in der gerasterten Darstellung benachbarten Messpunkte. Wenigstens einer der Parameter eines Messpunktes definiert eine Analyserichtung innerhalb der gerasterten Darstellung, wobei die Kantenfindungsoperatoren bei Anwendung auf einen Messpunkt dazu ausgebildet sind, entlang der durch den Parameter des Messpunkts definierten Analyserichtung wenigstens eine Materialgrenzfläche zu ermitteln. Für eine Teilmenge der Messpunkte wird durch wenigstens zwei der Parameter eines Messpunktes der Teilmenge jeweils eine Analyserichtung definiert, wobei je Analyserichtung wenigstens ein Kantenfindungsoperator auf den Messpunkt angewendet wird, der entlang der jeweiligen Analyserichtung die Lage wenigstens einer Materialgrenzfläche ermittelt, wobei die Parameterisierung aus den Bildinformationen wenigstens einer Teilmenge der Messpunkte ermittelt wird.

In noch einem weiteren Aspekt betrifft die Erfindung ein Computerprogrammprodukt mit von einem Computer ausführbaren Instruktionen, welche auf einem Computer ausgeführt den Computer dazu veranlassen, das Verfahren nach einem der Ansprüche 1 bis 7 8- durchzuführen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: schematische Darstellungen einer Ecke mit unterschiedlichen Analyserichtungen,
- Fig. 2: schematische Darstellungen einer einfachen Materialgrenzfläche und einer Mehrfachkante, und
- Fig. 3: ein Ablaufdiagramm zur Durchführung des erfindungsgemäßen Verfahrens,

Im Folgenden werden einander ähnliche oder identische Merkmale mit denselben Bezugszeichen gekennzeichnet.

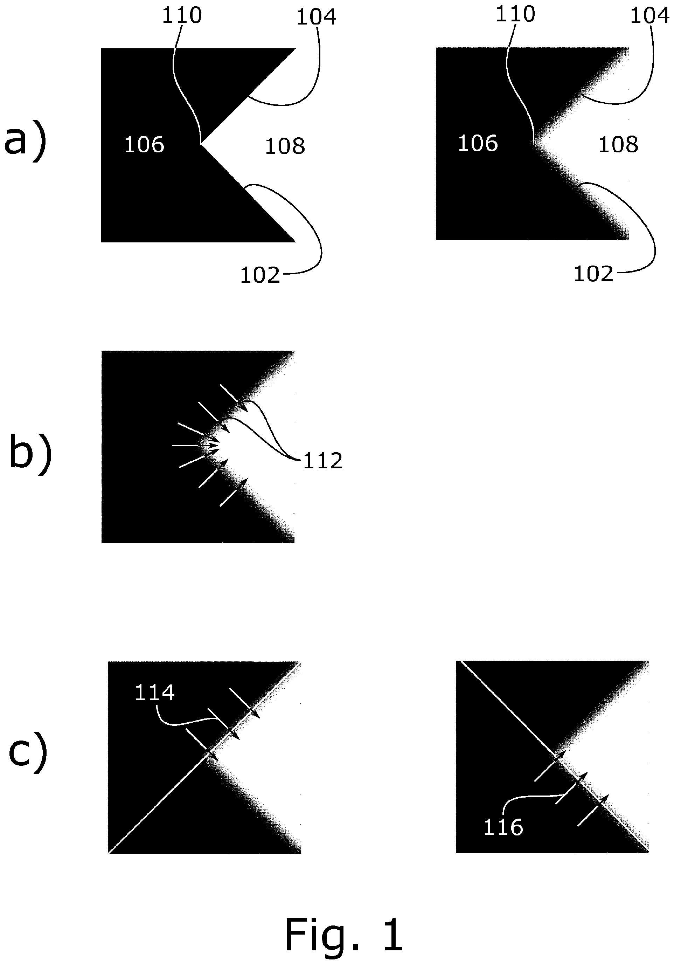

Die Fig. 1 a) zeigt eine schematische Darstellung einer Ecke, also einer Geometrie, bei der zwei Materialgrenzflächen 102 und 104 in einem rechten Winkel aufeinandertreffen. Eine Materialgrenzfläche kennzeichnet dabei genau jene Grenzfläche, bei der ein erstes Material und ein zweites Material zusammentreffen. Wird eine solche Geometrie durch ein bildgebendes Verfahren wie beispielsweise durch eine Computertomographie abgebildet, erhält man beispielsweise die in Fig. 1 a) rechts dargestellte Abbildung.

Bei der Untersuchung eines Objekts durch eine Computertomographie wird das Objekt mittels Röntgenstrahlen durchleuchtet, wobei die Röntgenstrahlen nach Durchtritt durch das untersuchte Objekt einen hinter dem Objekt liegenden Detektor belichten. Aufgrund unterschiedlicher Röntgendichten der in einem Objekt vorhandenen Materialien, werden dabei die das Objekt durchdringenden Röntgenstrahlen unterschiedlich stark abgeschwächt, sodass aus der durch den Detektor absorbierten Röntgenintensität auf die jeweilige Dichte bzw. Röntgenabsorption der durchstrahlten Medien des betrachteten Objekts geschlossen werden kann. Bei einer Computertomographie werden dabei Röntgenaufnahmen aus unterschiedlichen Richtungen durchgeführt, wobei aus der Summe der Röntgenaufnahmen anschließend eine dreidimensionale Abbildung des Objekts rekonstruiert wird. Die in Fig. 1 a) abgebildete Darstellung ist dabei eine zweidimensionale Schnittansicht, welche aus der dreidimensionalen Abbildung abgeleitet werden kann. Die Erfindung ist jedoch nicht auf eine solche zweidimensionale Abbildung beschränkt, sondern kann auch in einer dreidimensionalen Abbildung angewendet werden. Die zweidimensionale Darstellung wurde lediglich aus Gründen der leichteren Darstellbarkeit gewählt.

Bei den in Fig. 1 a) dargestellten Materialgrenzflächen 102 und 104 kann es sich beispielsweise jeweils um den Übergang von Luft zu einem Metall handeln. Aufgrund der geringeren Röntgenabsorption von Luft erscheint der Bereich 106 links dunkler als der Bereich 108 rechts.

Vergleicht man die ideale Ecke, welche in Fig. 1 a) links dargestellt ist, mit der durch ein bildgebendes Verfahren abgebildeten Ecke in Fig. 1 a) rechts, erscheinen die eigentlich scharf begrenzten Materialgrenzflächen 102 und 104 verwaschen und unscharf. Insbesondere die Spitze 110 der dargestellten Ecke, also jener Punkt in dem die Materialgrenzflächen 102 und 104 zusammentreffen, erscheint abgerundet. Die Ursache für eine solche Unschärfe der Abbildung hat diverse technische Gründe. Aus der Theorie der elektrischen Signalverarbeitung ist bekannt, dass ein Signal immer nur mit einer begrenzten Bandbreite verarbeitet werden kann. Folglich ist eine scharfe Kante, welche mathematisch einer Überlagerung unendlich vieler periodischer Signale entspricht, in der Signal- und Bildverarbeitung nicht realisierbar. Vielmehr fließt in die Abbildung eines Objekts stets die Punktspreizfunktion (point-spread-function, PSF) des abbildenden Systems ein. Mathematisch entspricht die Wirkung des bandbegrenzten Abbildungssystems einer Faltung des abzubildenden Signals mit der PSF des Systems. Dabei hat die PSF eines Abbildungssystems häufig die angenäherte Form einer Gauß-Glocke.

Aus der Faltung der scharfen Kanten bzw. Materialgrenzflächen 102 und 104, wie sie in Fig. 1 a) dargestellt sind, mit einer gaußförmigen PSF des abbildenden Systems, ergeben sich so verschwommene Kanten, bei denen die exakte Position der Materialgrenzflächen 102 und 104 nicht mehr klar erkennbar ist. Im Bereich der Ecke führt die Faltung des tatsächlichen Objekts mit der PSF des abbildenden Systems ferner zu einem Abrunden des Grenzflächenverlaufs. Es gibt im Stand der Technik verschiedene Ansätze, wie aus einem solchen Kantenverlauf trotz der unscharfen Grenzfläche eine Kantenposition bestimmt werden kann. Ein prominentes Beispiel hierfür ist der Canny-Algorithmus, welcher mit Hilfe des Gradienten und der zweiten Ableitung des Grauwertverlaufs die Kantenposition bestimmt. Ein weiterer Ansatz zur Bestimmung der Kantenposition besteht darin, die Differenz des maximalen bzw. minimalen Grauwertes in den Bereichen 106 und 108 zu ermitteln und anschließend anzunehmen, dass an der Stelle, an der der Grauwert der Hälfte dieser Differenz entspricht, die Kante liegen muss.

Algorithmen, welche sich den Gradienten eines Grauwertverlaufs zunutze machen, um die Position einer verschwommenen Materialgrenzfläche zu ermitteln, erzeugen jedoch zwangsläufig bei einer verschwommenen Ecke einen Fehler bei der Bestimmung der Lage der Materialgrenzflächen im Bereich der Spitze 110. Hierzu sind exemplarisch in der Fig. 1 b) die lokalen Gradienten entlang der Materialgrenzflächen durch Pfeile 112 dargestellt. In den Bereichen, in denen die Materialgrenzflächen 102 und 104 einen geraden Verlauf aufweisen und die Grauwerte der Materialgrenzflächen 102 und 104 nicht von dem Übergang im Bereich der Spitze 110 beeinflusst sind, steht der Gradient tatsächlich senkrecht auf den Materialgrenzflächen 102 und 104. Somit sind hier bei einer Anwendung des Canny-Operators gute Ergebnisse bei der Bestimmung der Position der Materialgrenzflächen zu erwarten.

Im Bereich der Spitze 110 funktioniert dieser Ansatz jedoch nicht mehr. Wie in Fig. 1. b) gut zu erkennen ist, schwenkt der Gradient im Bereich der Spitze 110 nämlich nur allmählich von der Ausrichtung im Bereich der ersten Materialgrenzfläche 102 zur Ausrichtung im Bereich der zweiten Materialgrenzfläche 104 um. Wäre die Ecke jedoch perfekt abgebildet, müsste der Gradient an der Spitze 110 instantan von seiner ersten Ausrichtung zur zweiten Ausrichtung "umklappen". Dies ist jedoch aufgrund der verschwommenen Ecke nicht der Fall. Folglich würde durch den Canny-Operator keine spitze Ecke detektiert werden, sondern lediglich eine abgerundete Ecke. Die exakte Position der Spitze 110 und der genaue Verlauf der Materialgrenzflächen 102 und 104 bis hin zur Spitze sind somit durch den Canny-Operator nicht feststellbar.

Die Erfindungsgemäße Lösung dieses Umstands ist exemplarisch in der Fig. 1 c) dargestellt. Erfindungsgemäß wird bei der Ermittlung der Materialgrenzflächen 102 und 104 die Richtung, entlang derer nach einer Materialgrenzfläche gesucht werden soll von vornherein festgelegt. Dabei wird für einer erste Materialgrenzfläche 102 eine erste Analyserichtung 114 (links) und für eine zweite Materialgrenzfläche 104 eine zweite Analyserichtung 116 (rechts) festgelegt. Dabei werden die Analyserichtungen über die komplette Breite der Materialgrenzflächen 102 und 104 beibehalten. Dies führt unter anderem dazu, dass im Bereich der Spitze 110 von einzelnen Messpunkten in mehreren Richtungen nach einer Materialgrenzfläche gesucht wird. Somit sind diesen Messpunkten erfindungsgemäß mehrere Parameter zugeordnet, welche jeweils eine Analyserichtung vorgeben. Dies ist in der Fig. 1 c) der Übersichtlichkeit halber jedoch nicht explizit dargestellt. Durch die feste Vorgabe der Analyserichtung ist insbesondere im Bereich der Spitze 110 eine exakte Bestimmung der Lage der Materialgrenzflächen 102 und 104 möglich.

Obwohl in der Fig. 1 nur der zweidimensionale Fall dargestellt ist, ist die Erfindung in analoger Art und Weise auch in einer dreidimensionalen Abbildung eines Objekts anwendbar. In diesem Szenario können einzelnen Messpunkten auch durchaus mehr als zwei Parameter zur Definition einer Analyserichtung zugeordnet sein.

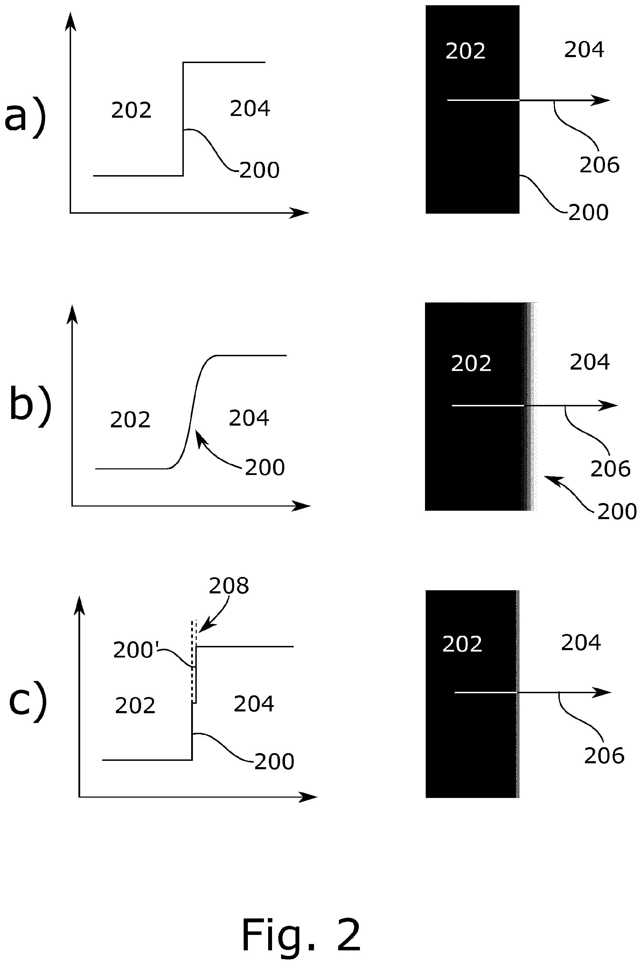

In der Fig. 2 a) ist schematisch eine idealisierte, technisch jedoch nicht realisierbare Abbildung einer Materialgrenzfläche 200 dargestellt, welche den Übergang zwischen einem ersten Bereich 202 mit einem ersten Material (beispielsweise Luft) und einem zweiten Bereich 204 mit einem zweiten Material (beispielsweise ein Metall) in einem Objekt darstellt. Dabei ist rechts eine zweidimensionale, idealisierte Darstellung des Übergangs dargestellt. Die unterschiedlichen materialspezifischen Parameter des ersten und zweiten Materials werden dabei exemplarisch durch unterschiedliche Grauwerte dargestellt. Beispielsweise kann es sich bei dem materialspezifischen Parameter um dessen Röntgendichte handeln.

In Fig. 2 a) ist links ferner eine Darstellung des materialspezifischen Parameters bzw. der Röntgendichte entlang des Pfeils 206 dargestellt. Der Pfeil 206 ist dabei senkrecht zu der Materialgrenzfläche 200 ausgerichtet. Dabei ist die Position entlang des Pfeils 206 auf der horizontalen Achse aufgetragen, während die entsprechende Röntgendichte an jeder Position auf der vertikalen Achse aufgetragen ist. Der Übergang zwischen den Bereichen 202 und 204 ist dabei als scharfe Grenzfläche dargestellt, welche mathematisch durch eine Sprungfunktion beschrieben werden kann. Wie zuvor bereits ausgeführt wurde, ist in Fig. 2 a) nur eine ideale Abbildung einer Materialgrenzfläche 100 dargestellt. Eine solche Abbildung ist jedoch technisch aufgrund verschiedener Umstände nicht realisierbar, wie es zuvor ebenfalls bereits ausgeführt wurde.

In Fig. 2 b) ist eine reale Darstellung desselben Materialübergangs 200 abgebildet. Auch hier ist rechts eine zweidimensionale Draufsicht auf den Materialübergang 200 abgebildet, während links der Verlauf der Röntgendichte entlang des Pfeils 206 abgebildet ist. Aus den zuvor bereits erläuterten Gründen ist der scharfe Übergang 200 von dem ersten Bereich 202 zu dem zweiten Bereich 204 aufgrund der Impulsantwort des zur Abbildung der Struktur verwendeten Systems verschwommen, sodass die exakte Position der Grenzfläche 200 zunächst nicht mehr direkt erkennbar ist.

Der zuvor beschriebene Canny-Algorithmus, wie auch andere Algorithmen zur Erkennung von Kanten, sind grundsätzlich durch unterschiedliche Ansätze in der Lage, aus dem in Fig. 2 b) dargestellten, verschwommenen Verlauf der Materialgrenzfläche 200 auf die Position der Materialgrenzfläche 200 zu schließen. Problematisch sind diese Ansätze jedoch, sobald nicht eine isolierte Grenzfläche vorliegt, sondern eine Abfolge von dicht benachbarten Materialgrenzflächen. Ein solcher Fall ist in idealisierter, nicht verschwommener Darstellung, beispielhaft in Fig. 2 c) dargestellt. Auch hier liegt in dem ersten Bereich 202 beispielsweise Luft vor, während in dem zweiten Bereich 204 beispielsweise ein Metall vorliegt. Das in Fig. 2 c) dargestellte Bild kann beispielsweise entstehen, wenn das Metall im Bereich 204 an seiner Oberfläche mit einer Beschichtung versehen ist, deren spezifische Röntgenabsorption sich von der Absorption durch Metall unterscheidet. Die Beschichtung ist dann als zusätzlicher Bereich 208 mit einer von Luft und Metall verschiedenen Graustufe sichtbar. Dabei ist der Bereich 208 sehr schmal. Bei einer Beschichtung kann es sich beispielsweise um eine Schicht mit einer Dicke von wenigen Mikrometern handeln.

Die zuvor beschriebenen "Verschmierung" des Kantenverlaufs aufgrund der PSF des Systems führt nun dazu, dass der verschmierte Verlauf der einfachen Materialgrenzfläche kaum von einer Abfolge dicht benachbarter Materialgrenzflächen unterscheidbar ist. Tatsächlich erscheint das Resultat einer Faltung des in Fig. 2 c) dargestellten Kantenverlaufs sehr ähnlich zu dem Kantenverlauf, der in Fig. 2 b) dargestellt ist. Folglich ist mit den im Stand der Technik bekannten Verfahren eine Unterscheidung einer einfachen Kante von einer Abfolge dicht benachbarter Kanten, also einer "Mehrfachkante" zunächst nicht möglich, da diese Algorithmen nicht in der Lage sind, die einzelnen Grenzflächen zu erkennen.

Nach einer Ausführungsform kann jedoch auch aus dem verschmierten Verlauf einer Mehrfachkante die Position der einzelnen Materialgrenzflächen ermittelt werden, wenn bei der Untersuchung des Grauwertverlaufs schon bekannt ist, dass es sich nicht um eine isolierte Grenzfläche, sondern um eine Mehrfachkante handelt. Aus dem Wissen heraus, dass eine Mehrfachkante vorliegt, kann abgeleitet werden, wie eine solche Mehrfachkante nach einer Faltung mit der PSF des Systems aussehen müsste. Vergleicht man nun das so erhaltene Modell mit dem vorgefundenen Verlauf der Grauwerte und/oder mit einem Verlauf von aus den Grauwerten abgeleiteten Werten, können die Positionen der einzelnen Materialgrenzflächen der Mehrfachkante bestimmt werden. Dabei wird erfindungsgemäß durch den Bildpunkten zugeordnete Parameter angezeigt, ob bei der Untersuchung eines Grauwertverlaufs im Bereich einer Materialgrenzfläche von einer isolierten Grenzfläche ausgegangen werden soll, oder ob eine Mehrfachkante vorliegt, sodass ein entsprechendes Modell zugrunde gelegt werden soll.

Es ist im Rahmen der vorliegenden Erfindung auch durchaus möglich, Geometrien zu untersuchen, welche eine Kombination der in den Fig.en 1 und 2 dargestellten Umstände darstellen. So ist es beispielsweise durchaus auch möglich, dass eine oder beide der in Fig. 1 dargestellten Materialgrenzflächen 102 und 104 nochmals beschichtet sind, sodass sich die in Fig. 2 c) dargestellte Situation ergibt. In diesem Fall kann insbesondere bei der Untersuchung der Spitze 110 vorgesehen sein, dass von einem einzelnen Messpunkt in mehreren vorgegebenen Richtungen nach mehreren dicht aufeinanderfolgenden Materialgrenzflächen gesucht wird. Auf diese Weise können auch in sehr komplexen Geometrien die exakten Positionen der Materialgrenzflächen sicher bestimmt werden.

Dabei ist das erfindungsgemäße Verfahren nicht auf eine direkte Abfolge von zwei Materialgrenzflächen beschränkt. Es ist vielmehr auch möglich, dass eine beliebige Anzahl dicht benachbarter Grenzflächen spezifiziert wird, sodass bei der Analyse der Grauwerte beispielsweise von einer Abfolge von fünf benachbarten Materialgrenzflächen ausgegangen wird. Eine solche Abfolge kann beispielsweise bei einer lackierten Oberfläche entstehen, bei der übereinander eine Grundierung, ein Farblack und ein Klarlack aufgetragen sind, die jeweils nur mit Dicken von wenigen Mikrometern vorliegen.

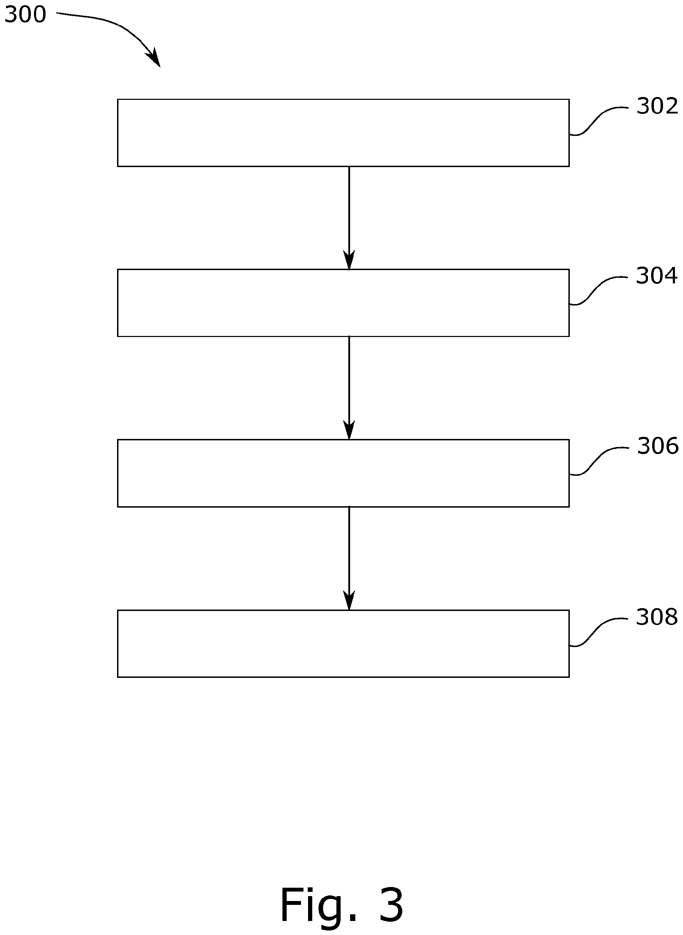

In Fig. 3 ist ein Ablaufdiagramm einer Ausführungsform des erfindungsgemäßen Verfahrens dargestellt. Das Verfahren kann beispielsweise mit einer Vorrichtung umgesetzt werden, welche wenigstens einen Computertomographen, sowie eine mit dem Computertomographen verbundene Datenverarbeitungseinrichtung umfasst. Die Datenverarbeitungseinrichtung muss dabei nicht zwingend als zusammenhängende, physische Entität vorliegen, sondern kann auch dezentral, bspw. im Sinne des Cloud-Computings ausgeführt sein.

In einem ersten Verfahrensschritt 302 des in Fig. 3 dargestellten Verfahrens 300 wird eine Messung an einem zu untersuchenden Objekt durchgeführt. Bei dem Objekt kann es sich beispielsweise um ein Bauteil handeln, welches aus einer Fertigungsstraße entnommen wurde und zur Qualitätssicherung einer Prüfung unterzogen werden soll. Bei der Messung handelt es sich vorzugsweise um eine computertomographische Messung, wie es zuvor bereits ausgeführt wurde.

Das Verfahren kann jedoch grundsätzlich auch auf die Messergebnisse anderer bildgebender Verfahren, beispielsweise der Magnetresonanztomographie oder 3D-Ultraschall, angewendet werden.

Durch die Messung werden zunächst Rohdaten erzeugt, welche im Falle der Computertomographie beispielsweise eine Vielzahl von Röntgenbildern des untersuchten Objekts aus einer Vielzahl von Richtungen entsprechen. Aus den so erhaltenen Rohdaten wird in Schritt 304 eine dreidimensionale Abbildung des untersuchten Objekts erzeugt, wobei die Abbildung gerastert ist. Zur Rekonstruktion des Objekts kann beispielsweise eine gefilterte Rückprojektion auf die zuvor bestimmten Rohdaten angewendet werden. Die Rasterung des rekonstruierten Objekts kann dann beispielsweise erfolgen, indem das rekonstruierte Objekt mit einem dreidimensionalen Gitter überlagert wird, wobei jedem Volumenelement des Gitters der entsprechende lokale Grauwert des Objekts im Bereich des Volumenelements (Voxels) zugeordnet wird. Üblicherweise wird das Raster beispielsweise bei der Computertomographie durch die Anordnung der einzelnen Sensoren der verwendeten Sensoranordnung vorgegeben. Es ist jedoch auch möglich ein hiervon abweichendes Raster zu definieren.

Nach erfolgter Rekonstruktion und Rasterung des untersuchten Objekts wird anschließend in Schritt 306 eine Parametrisierung des gerasterten Objekts ermittelt. Hierzu kann beispielsweise eine Nutzerschnittstelle vorgesehen sein, über die ein Anwender Bereiche des rekonstruierten, untersuchten Objekts markiert, an denen besondere Geometrien, wie beispielsweise Ecken und Winkel, oder auch Mehrfachkanten vorliegen. Ferner können dabei im Zuge der Parametrisierung auch eine oder mehrere Richtungen spezifiziert werden, in denen, ausgehend von einem Voxel, nach Materialgrenzflächen gesucht werden soll. Neben einer Eingabe über eine Nutzerschnittstelle kann eine solche Parametrisierung zur Angabe von Richtungen für die Ermittlung eines Kantenverlaufs im Bereich von Ecken und Winkeln auch direkt aus den Messdaten selbst ermittelt werden.

Neben einer Nutzereingabe kann eine Parametrisierung auch durch eine erste Abtastung des rekonstruierten Objekts nach Materialgrenzflächen ermittelt werden. Hierzu kann beispielsweise zunächst unter der Annahme, dass das gesamte Objekt nur grade, einfache Materialgrenzflächen aufweist, eine Abtastung des gesamten Objekts erfolgen, sodass eine Vielzahl von Kantenpositionen ermittelt wird. Anschließend können die so ermittelten Kantenpositionen dahingehend überprüft werden, wie gut der an der Kantenposition vorliegende Grauwertverlauf überhaupt zu dem theoretisch zu erwartenden Grauwertverlauf für eine isolierte, grade Materiagrenzfläche passt. Wird dabei, beispielsweise über einen Chi-Quadrat Test ermittelt, dass der vorgefundene Grauwertverlauf nicht hinreichend gut mit dem zu erwartenden Grauwertverlauf übereinstimmt, wird den Voxeln in der Umgebung der untersuchten Materialgrenzfläche ein Parameter zugeordnet, der anzeigt, dass hier nach einer Mehrfachkante, oder nach einer gekrümmten Kante gesucht werden sollte.

Nachdem die Parametrisierung des rekonstruierten Objekts erfolgt ist, werden anschließend in Schritt 308 parameterabhängige Kantenfindungsoperatoren auf das rekonstruierte Objekt angewandt. Dabei wird auf jeden Voxel oder zumindest eine Teilmenge der Voxel Kantenfindungsoperatoren angewendet, welche aus dem Grauwert des Voxels und den Grauwerten der benachbarten Voxel die Position von Materialgrenzflächen bestimmen. Die Art des angewendeten Kantenfindungsoperators wird dabei durch den Parameter bestimmt, der dem Voxel zugeordnet ist. Werden beispielsweise durch den Parameter eine oder mehrere Analyserichtungen definiert, werden entsprechende Kantenfindungsoperatoren auf den Voxel angewendet, welche in den durch den Parameter angezeigten Analyserichtungen nach einer Materialgrenzfläche suchen. Wird ferner durch einen Parameter des untersuchten Voxels angezeigt, dass in der Umgebung des Voxels eine Mehrfachkante vorliegt, welche aus drei einzelnen Materialgrenzflächen aufgebaut ist, wird ein entsprechender Kantenfindungsoperator auf den untersuchten Voxel angewandt, welcher in der angegebenen Analyserichtung nach einer eben solchen Mehrfachkante sucht. Dabei kann es durchaus vorkommen, dass einem Voxel mehrere Parameter zugeordnet sind. So kann durch die Parametrisierung eines Voxels beispielsweise eine Mehrzahl von Analyserichtungen angezeigt sein, wobei nur für einen Teil der Analyserichtungen die Angabe vorliegt, dass eine Mehrfachkante in der Analyserichtung erwartet wird. Zur Ermittlung der Materialgrenzflächen sind die Kantenfindungsoperatoren dazu ausgebildet, ein den Werten der Parametrisierung entsprechendes theoretisches Modell des Grauwertverlaufs zu erstellen, und das Modell mit den Grauwerten der umliegenden Voxel zu vergleichen. Aus dem Vergleich der tatsächlichen Grauwerte mit dem theoretischen Modell können dann die exakten Positionen der Materialgrenzflächen ermittelt werden.

Die Erfindung ist nicht auf eine der vorbeschriebenen Ausführungsformen beschränkt, sondern in vielfältiger Weise innerhalb des Schutzumfangs der Ansprüche abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen innerhalb des Schutzumfangs der Ansprüche erfindungswesentlich sein.

### Bezugszeichenliste

- 102: Materialgrenzfläche
- 104: Materialgrenzfläche
- 106: Bereich
- 108: Bereich
- 110: Spitze
- 112: Pfeil
- 114: erste Analyserichtung
- 116: zweite Analyserichtung
- 200: Materialgrenzfläche
- 202: erster Bereich
- 204: zweiter Bereich
- 206: Pfeil
- 208: zusätzlicher Bereich

## Patentansprüche

1. Computer-implementiertes Verfahren zur Bestimmung von Materialgrenzflächen eines Objekts aus wenigstens einer Messung an dem Objekt,
wobei durch die Messung eine gerasterte Darstellung des Objekts erzeugt wird,
wobei die gerasterte Darstellung eine Vielzahl von Messpunkten aufweist,
wobei ein Messpunkt wenigstens eine Bildinformation aufweist, welche einen Wert einer Messgröße für das Objekt an der Position des Messpunktes anzeigt,
wobei das Verfahren die folgenden Schritte aufweist:
• Ermitteln einer Parametrisierung der gerasterten Darstellung des Objekts, wobei die Parametrisierung den Messpunkten einer Teilmenge der Messpunkte der Darstellung jeweils wenigstens einen Parameter zuordnet,
• Anwenden wenigstens eines parameterabhängigen Kantenfindungsoperators auf die Messpunkte der gerasterten Darstellung, wobei ein Kantenfindungsoperator dazu ausgebildet ist, die Lage von wenigstens einer Materialgrenzfläche in der gerasterten Darstellung zu ermitteln, und
wobei der Kantenfindungsoperator bei dem Ermitteln der Lage einer Materialgrenzfläche aus der Bildinformation eines Messpunkts wenigstens die Bildinformation einer Teilmenge der zu dem Messpunkt in der gerasterten Darstellung benachbarten Messpunkte berücksichtigt,
wobei wenigstens einer der Parameter eines Messpunktes eine Analyserichtung innerhalb der gerasterten Darstellung definiert, wobei die Kantenfindungsoperatoren bei Anwendung auf einen Messpunkt dazu ausgebildet sind, entlang der durch den Parameter des Messpunktes definierten Analyserichtung wenigstens eine Materialgrenzfläche zu ermitteln,
wobei für eine Teilmenge der Messpunkte durch wenigstens zwei der Parameter eines Messpunktes der Teilmenge jeweils eine Analyserichtung definiert wird, wobei je Analyserichtung wenigstens ein Kantenfindungsoperator auf den Messpunkt angewendet wird, der entlang der jeweiligen Analyserichtung die Lage wenigstens einer Materialgrenzfläche ermittelt,
wobei die Parametrisierung aus den Bildinformationen wenigstens einer Teilmenge der Messpunkte ermittelt wird.

2. Verfahren nach Anspruch 1, **dadurch gekennzeichnet, dass** die Bildinformation eines Messpunktes wenigstens einen Grauwert umfasst, der den Wert der Messgröße für das Objekts an der Position des Messpunkts anzeigt, wobei der wenigstens eine Kantenfindungsoperator dazu ausgebildet ist, ausgehend von einem Messpunkt durch einen Fit eines theoretischen Modells der Grauwerte für eine Materialgrenzfläche an den Verlauf der Grauwerte von Messpunkten in der Umgebung des Messpunktes die Lage der Materialgrenzfläche zu ermitteln.

3. Verfahren nach Anspruch 2, **dadurch gekennzeichnet, dass** wenigstens ein Kantenfindungsoperator dazu ausgebildet ist, die Lage einer Materialgrenzfläche durch den Fit entlang der durch den wenigstens einen Parameter angezeigten Analyserichtung zu ermitteln.

4. Verfahren nach einem der vorherigen Ansprüche, **dadurch gekennzeichnet, dass** die Parametrisierung aus einem Modell des untersuchten Objekts bestimmt wird.

5. Verfahren nach Anspruch 4, **dadurch gekennzeichnet, dass** es sich bei dem Modell um ein CAD-Modell handelt.

6. Verfahren nach einem der vorherigen Ansprüche, **dadurch gekennzeichnet, dass** die Parametrisierung durch wenigstens eine Benutzereingabe erzeugt wird.

7. Verfahren nach einem der vorherigen Ansprüche, **dadurch gekennzeichnet, dass** es sich bei wenigstens einem der Kantenfindungsoperatoren um einen Mehrfachkantenfindungsoperator handelt, der dazu ausgebildet ist, bei Anwendung auf einen Messpunkt die Lage von wenigstens zwei direkt benachbarten Materialgrenzflächen in dem Objekt zu ermitteln, wobei der Mehrfachkantenfindungsoperator genau dann auf einen Messpunkt angewendet wird, wenn wenigstens einer der Parameter des Messpunktes anzeigt, dass innerhalb der Umgebung des Messpunktes mehrere Materialgrenzflächen direkt benachbart zueinander angeordnet sind.

8. Vorrichtung zur Durchführung von Messungen an einem Objekt und zur Bestimmung von Materialgrenzflächen eines Objekts mittels wenigstens einer Messung an dem Objekt,
wobei durch die Messung eine gerasterte Darstellung des Objekts erzeugt wird, wobei die gerasterte Darstellung eine Vielzahl von Messpunkten aufweist,
wobei ein Messpunkt wenigstens eine Bildinformation aufweist, welche einen Wert einer Messgröße für das Objekt an der Position des Messpunktes anzeigt,
wobei die Vorrichtung dazu ausgebildet ist:
• wenigstens eine Messung an dem Objekt durchzuführen,
• eine Parametrisierung der aus der Messung erhaltenen gerasterten Darstellung des Objekts zu ermitteln, wobei die Parametrisierung den Messpunkten einer Teilmenge der Messpunkte der Darstellung jeweils wenigstens einen Parameter zuordnet, und
• wenigstens einen parameterabhängigen Kantenfindungsoperator auf die Messpunkte der gerasterten Darstellung anzuwenden, wobei ein Kantenfindungsoperator dazu ausgebildet ist, die Lage von wenigstens einer Materialgrenzfläche in der gerasterten Darstellung zu ermitteln,
wobei der Kantenfindungsoperator bei dem Ermitteln der Lage einer Materialgrenzfläche aus der Bildinformation eines Messpunkts wenigstens die Bildinformation einer Teilmenge der zu dem Messpunkt in der gerasterten Darstellung benachbarten Messpunkte berücksichtigt,
wobei wenigstens einer der Parameter eines Messpunktes eine Analyserichtung innerhalb der gerasterten Darstellung definiert, wobei die Kantenfindungsoperatoren bei Anwendung auf einen Messpunkt dazu ausgebildet sind, entlang der durch den Parameter des Messpunktes definierten Analyserichtung wenigstens eine Materialgrenzfläche zu ermitteln,
wobei für eine Teilmenge der Messpunkte durch wenigstens zwei der Parameter eines Messpunktes der Teilmenge jeweils eine Analyserichtung definiert wird, wobei je Analyserichtung wenigstens ein Kantenfindungsoperator auf den Messpunkt angewendet wird, der entlang der jeweiligen Analyserichtung die Lage wenigstens einer Materialgrenzfläche ermittelt,
wobei die Parametrisierung aus den Bildinformationen wenigstens einer Teilmenge der Messpunkte ermittelt wird.

9. Computerprogrammprodukt mit von einem Computer ausführbaren Instruktionen, welche auf einem Computer ausgeführt den Computer dazu veranlassen, das Verfahren nach einem der Ansprüche 1 bis 7 durchzuführen.

## Claims

1. Computer-implemented method for determining material interfaces of an object from at least one measurement on the object,
a rasterized representation of the object being produced by means of the measurement,
the rasterized representation having a plurality of measurement points,
a measurement point having at least one piece of image information which indicates a value of a measurement variable for the object at the position of the measurement point,
the method comprising the following steps:
• determining a parameterization of the rasterized representation of the object, the parameterization assigning at least one parameter to each of the measurement points of a subset of the measurement points of the representation,
• applying at least one parameter-dependent edge-detection operator to the measurement points of the rasterized representation, an edge-detection operator being designed to determine the location of at least one material interface in the rasterized representation, and
in the determination of the location of a material interface from the image information of a measurement point, the edge-detection operator taking into consideration at least the image information of a subset of the measurement points adjacent to the measurement point in the rasterized representation,
at least one of the parameters of a measurement point defining an analysis direction within the rasterized representation, wherein, when applied to a measurement point, the edge-detection operators are designed to determine at least one material interface along the analysis direction defined by means of the parameter of the measurement point,
an analysis direction being defined in each case for a subset of the measurement points by means of at least two of the parameters of a measurement point of the subset, at least one edge-detection operator being applied to the measurement point for each analysis direction, which edge-detection operator determines the location of at least one material interface along the particular analysis direction, the parameterization being determined from the image information of at least a subset of the measurement points.

2. Method according to Claim 1, **characterized in that** the image information of a measurement point comprises at least one grey-scale value which indicates the value of the measurement variable for the object at the position of the measurement point, the at least one edge-detection operator being designed, on the basis of a measurement point, to determine the location of the material interface by means of a fit of a theoretical model of the grey-scale values for a material interface to the curve of the grey-scale values of measurement points in the vicinity of the measurement point.

3. Method according to Claim 2, **characterized in that** at least one edge-detection operator is designed to determine the location of a material interface by means of the fit along the analysis direction indicated by the at least one parameter.

4. Method according to any of the preceding claims, **characterized in that** the parameterization is determined from a model of the object being investigated.

5. Method according to Claim 4, **characterized in that** the model is a CAD model.

6. Method according to any of the preceding claims, **characterized in that** the parameterization is generated by at least one user input.

7. Method according to any of the preceding claims, **characterized in that** at least one of the edge-detection operators is a multiple edge-detection operator, which is designed, when applied to a measurement point, to determine the location of at least two directly adjacent material interfaces in the object, wherein the multiple edge-detection operator is applied to a measurement point exactly when at least one of the parameters of the measurement point indicates that a plurality of material interfaces are arranged directly adjacent to each other within the vicinity of the measurement point.

8. Device for performing measurements on an object and for determining material interfaces of an object by means of at least one measurement on the object,
a rasterized representation of the object being produced by means of the measurement,
the rasterized representation having a plurality of measurement points,
a measurement point having at least one piece of image information which indicates a value of a measurement variable for the object at the position of the measurement point,
the device being designed to:
• carry out at least one measurement on the object,
• determine a parameterization of the rasterized representation of the object obtained from the measurement, the parameterization assigning in each case at least one parameter to the measurement points of a subset of the measurement points of the representation, and
• apply at least one parameter-dependent edge-detection operator to the measurement points of the rasterized representation, an edge-detection operator being designed to determine the location of at least one material interface in the rasterized representation,
in the determination of the location of a material interface from the image information of a measurement point, the edge-detection operator taking into consideration at least the image information of a subset of the measurement points adjacent to the measurement point in the rasterized representation,
at least one of the parameters of a measurement point defining an analysis direction within the rasterized representation, wherein, when applied to a measurement point, the edge-detection operators are designed to determine at least one material interface along the analysis direction defined by means of the parameter of the measurement point,
an analysis direction being defined in each case for a subset of the measurement points by means of at least two of the parameters of a measurement point of the subset, at least one edge-detection operator being applied to the measurement point for each analysis direction, which edge-detection operator determines the location of at least one material interface along the particular analysis direction, the parameterization being determined from the image information of at least a subset of the measurement points.

9. Computer program product having instructions executable by a computer, which when executed on a computer cause the computer to carry out the method according to any of Claims 1 to 7.

## Revendications

1. Procédé mis en œuvre par ordinateur permettant de déterminer des surfaces limites de matière d'un objet à partir d'au moins une mesure sur l'objet,
dans lequel la mesure produit une représentation tramée de l'objet,
dans lequel la représentation tramée présente une pluralité de points de mesure,
dans lequel un point de mesure présente au moins une information d'image qui indique une valeur d'une grandeur de mesure pour l'objet à la position du point de mesure,
dans lequel le procédé présente les étapes suivantes consistant à :
• établir un paramétrage de la représentation tramée de l'objet, le paramétrage associant aux points de mesure d'un sous-ensemble des points de mesure de la représentation respectivement au moins un paramètre,
• appliquer au moins un opérateur de recherche d'arête dépendant des paramètres aux points de mesure de la représentation tramée, l'opérateur de recherche d'arête étant réalisé pour établir la situation d'au moins une surface limite de matière sur la représentation tramée, et
dans lequel l'opérateur de recherche d'arête tient compte lors de l'établissement de la situation de la surface limite de matière à partir de l'information d'image d'un point de mesure au moins de l'information d'image d'un sous-ensemble des points de mesure voisins du point de mesure sur la représentation tramée,
dans lequel au moins l'un des paramètres d'un point de mesure définit une direction d'analyse à l'intérieur de la représentation tramée, dans lequel lors de l'application à un point de mesure, les opérateurs de recherche d'arête sont réalisés pour établir au moins une surface limite de matière le long de la direction d'analyse définie par le paramètre du point de mesure,
dans lequel respectivement une direction d'analyse est définie pour un sous-ensemble des points de mesure par au moins deux des paramètres d'un point de mesure du sous-ensemble, dans lequel au moins un opérateur de recherche d'arête par direction d'analyse est appliqué au point de mesure, qui établit la position d'au moins une surface de limite de matière le long de la direction d'analyse respective,
dans lequel le paramétrage est établi à partir des informations d'image au moins un sous-ensemble des points de mesure.

2. Procédé selon la revendication 1, **caractérisé en ce que** l'information d'image d'un point de mesure comprend au moins un niveau de gris qui indique la valeur de la grandeur de mesure pour l'objet à la position du point de mesure, dans lequel ledit au moins un opérateur de recherche d'arête est réalisé pour établir la situation de la surface limite de matière en partant d'un point de mesure par un ajustement d'un modèle théorique des niveaux de gris pour une surface de limite de matière à la courbe des niveaux de gris de points de mesure dans l'environnement du point de mesure.

3. Procédé selon la revendication 2, **caractérisé en ce qu'**au moins un opérateur de recherche d'arête est réalisé pour établir la situation d'une surface limite de matière par l'ajustement le long de la direction d'analyse indiquée par ledit au moins un paramètre.

4. Procédé selon l'une quelconque des revendications précédentes, **caractérisé en ce que** le paramétrage est déterminé à partir d'un modèle de l'objet examiné.

5. Procédé selon la revendication 4, **caractérisé en ce que** le modèle est un modèle de CAD.

6. Procédé selon l'une quelconque des revendications précédentes, **caractérisé en ce que** le paramétrage est produit par au moins une entrée utilisateur.

7. Procédé selon l'une quelconque des revendications précédentes, **caractérisé en ce qu'**au moins l'un des opérateurs de recherche d'arête est un opérateur de recherche d'arête multiple qui, lors de l'application à un point de mesure, est réalisé pour établir la situation d'au moins deux surfaces limites de matière directement voisines dans l'objet, dans lequel l'opérateur de recherche d'arête multiple est appliqué à un point de mesure exactement lorsqu'au moins l'un des paramètres du point de mesure indique que plusieurs surfaces limites de matière sont disposées de manière directement voisine les unes des autres à l'intérieur de l'environnement du point de mesure.

8. Dispositif permettant d'effectuer des mesures sur un objet et de déterminer des surfaces limites de matière d'un objet au moyen d'au moins une mesure sur l'objet,
dans lequel la mesure produit une représentation tramée de l'objet,
dans lequel la représentation tramée présente une pluralité de points de mesure,
dans lequel un point de mesure présente au moins une information d'image qui indique une valeur d'une grandeur d'image pour l'objet à la position du point de mesure,
le dispositif étant réalisé pour :
• effectuer au moins une mesure sur l'objet,
• établir un paramétrage de la représentation tramée de l'objet obtenue à partir de la mesure, dans lequel le paramétrage associe aux points de mesure d'un sous-ensemble des points de mesure de la représentation respectivement au moins un paramètre, et
• appliquer au moins un opérateur de recherche d'arête dépendant des paramètres aux points de mesure de la représentation tramée, dans lequel un opérateur de recherche d'arête est réalisé pour établir la situation d'au moins une surface limite de matière sur la représentation tramée,
dans lequel l'opérateur de recherche d'arête tient compte lors de l'établissement de la situation d'une surface limite de matière à partir de l'information d'image d'un point de mesure au moins de l'information d'image d'un sous-ensemble des points de mesure voisins du point de mesure sur la représentation tramée,
dans lequel au moins l'un des paramètres d'un point de mesure définit une direction d'analyse à l'intérieur de la représentation tramée, dans lequel lors de l'application à un point de mesure, les opérateurs de recherche d'arête sont réalisés pour établir au moins une surface limite de matière le long de la direction d'analyse définie par le paramètre du point de mesure,
dans lequel respectivement une direction d'analyse est définie pour un sous-ensemble des points de mesure par au moins deux des paramètres d'un point de mesure du sous-ensemble, dans lequel pour chaque direction d'analyse, au moins un opérateur de recherche d'arête est appliqué au point de mesure qui établit au moins une surface limite de matière le long de la direction d'analyse respective,
dans lequel le paramétrage est établi à partir des informations d'image d'au moins un sous-ensemble des points de mesure.

9. Produit de programme informatique comprenant des instructions exécutables par un ordinateur qui, lorsqu'elles sont exécutées sur un ordinateur, font que l'ordinateur exécute le procédé selon l'une quelconque des revendications 1 à 7.
